# EUROPÄISCHE PATENTSCHRIFT

(11) **EP 4 384 369 B1**
(45) Veröffentlichungstag und Bekanntmachung des Hinweises auf die Patenterteilung: **29.04.2026**
(21) Anmeldenummer: 22765427.4
(22) Anmeldetag: 10.08.2022
(51) Int. Cl.: B29C 49/24, B29C 49/42, B29L 31/00, D21J 3/10, B29K 311/10, B29K 711/10, D21J 7/00

(54) **VERFAHREN UND VORRICHTUNG ZUM BESTÜCKEN EINES FASERBASIERTEN BEHÄLTERS MIT EINEM PREFORM UND ZUM EINBRINGEN DES BEHÄLTERS IN EIN BLASFORMWERKZEUG**
METHOD AND DEVICE FOR LOADING A FIBRE-BASED CONTAINER WITH A PREFORM AND FOR INSERTING THE CONTAINER INTO A BLOW MOULD
PROCÉDÉ ET DISPOSITIF DE CHARGE D'UN RÉCIPIENT À BASE DE FIBRE AVEC UNE PRÉFORME ET D'INSERTION DU RÉCIPIENT DANS UN MOULE DE SOUFFLAGE

(30) Priorität: 11.08.2021 CH 0701502021
(43) Veröffentlichungstag der Anmeldung: 19.06.2024
(73) Patentinhaber: Alpla Werke Alwin Lehner GmbH & Co. KG, 6971 Hard (AT)
(72) Erfinder: SOHM, Alexander, 6850 Dornbirn (AT); DEMIR, Adem, 6923 Lauterach (AT)
(74) Vertreter: Bohest AG Branch Ostschweiz
(86) Internationale Anmeldenummer: PCT/EP2022/072407
(87) Internationale Veröffentlichungsnummer: WO 2023/017065

(56) Entgegenhaltungen:
- EP-B1- 3 375 593
- IT-A1- 201600 128 354
- US-A- 3 893 882
- US-A1- 2011 127 141

## Beschreibung

Die vorliegende Erfindung betrifft ein Verfahren zum Bestücken eines faserbasierten Behälters mit einem Preform, eine Vorrichtung zum Bestücken eines faserbasierten Behälters mit einem Preform sowie ein Verfahren zum Einbringen eines faserbasierten Behälters gemeinsam mit einem darin angeordneten Preform in ein Blasformwerkzeug gemäss dem Oberbegriff der unabhängigen Ansprüche.

Aus dem Stand der Technik sind unterschiedliche Behälter zur Aufnahme von Flüssigkeit bekannt. So sind beispielsweise Glasflaschen oder Kunststoffflaschen zur Aufnahme von Getränken bekannt geworden. Es wurden ebenfalls bereits Behälter vorgeschlagen, die aus faserbasiertem Material gefertigt sind.

US 2011/127141 Al, IT 2016 0012 8354 Al und US 3 893 882 A offenbaren Verfahren und Vorrichtungen zum Befördern von Behältern in einer vorbestimmten Lage, wobei die Vorrichtungen Drehteller oder Förderbänder aufweisen.

EP 3 375 593 B1 offenbart ein Verfahren zum Bestücken eines faserbasierten Behälters mit einem Preform, umfassend die Schritte
- Bereitstellen eines Behälters, und
- Einbringen eines Preforms in den Behälter.

Ein faserbasierter Behälter wurde in der WO 2012/139590 A1 vorgeschlagen. Zur Herstellung dieses Behälters wird sogenannte Pulpe in eine zweiteilige Form eingebracht und mit einem flexiblen Ballon in dieser Form an eine entsprechende Wandung gedrückt und entsprechend komprimiert.

Pulpe ist eine Mischung aus Fasern und Wasser, insbesondere Naturfasern wie Hanffasern, Zellulosefasern oder Flachsfasern oder einer Mischung davon. Gegebenenfalls weist die Pulpe Zusatzstoffe auf, wie beispielsweise aus der PCT/EP2019/076839 bekannt, die beispielsweise ein Aushärten der komprimierten Pulpe verbessern oder Einfluss auf das spätere Aussehen haben oder generell die Eigenschaften der Pulpe oder des späteren Behälters verändern.

Bei diesen faserbasierten Behältern besteht die Gefahr, dass diese durch im Behälter gelagerte Flüssigkeit aufweichen und beispielsweise undicht werden oder dass Stoffe aus dem Behälter in die Flüssigkeit diffundieren.

Es ist vorgeschlagen worden, derartige faserbasierte Behälter mit einer inneren Schicht aus Kunststoff zu versehen, insbesondere innerhalb des faserbasierten Behälters eine Kunststoffflasche anzuordnen, welche entsprechende Barrierefunktionen übernehmen kann. Der faserbasierte Behälter stellt hier also lediglich eine Hülle für einen dünnwandigen Kunststoffbehälter bereit. Eine derartige Kombination ist aus der WO 2018/167192 A1 bekannt geworden.

Typischerweise wird also eine faserbasierte Hülle bereitgestellt in die eine Kunststoffschicht oder eine Kunststoffauskleidung eingebracht wird. Dies geschieht typischerweise in der Form, dass in einem ersten Schritt die faserbasierte Hülle bereitgestellt wird und in einem zweiten Schritt ein Preform in diese Hülle eingebracht wird. Im Anschluss wird dieser Preform innerhalb der faserbasierten Hülle aufgeblasen, bis dieser eine Innenkontur der faserbasierten Hülle berührt, bzw. mit der Innenkontur der faserbasierten Hülle in Kontakt ist. Dieser Aufblasvorgang geschieht typischerweise in einem Blasformwerkzeug, deren Kavität der Aussenkontur der faserbasierten Hülle entspricht. Wie in der WO 2018/167192 A1 beschrieben, besteht die Gefahr der Rissbildung im faserbasierten Behälter. Diese ist durch die Lehre der WO 2018/167192 A1 zwar teilweise reduziert worden, jedoch sind die Ergebnisse nach wie vor nicht befriedigend.

Es ist Aufgabe der Erfindung zumindest einen oder mehrere Nachteile des Standes der Technik zu beheben. Insbesondere soll eine Vorrichtung und ein Verfahren zum Bestücken eines faserbasierten Behälters mit einem Preform sowie ein Verfahren zum Einbringen dieses Behälters in ein Blasformwerkzeug geschaffen werden, welche es ermöglichen, die Anzahl defekter Behälter zu reduzieren.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässes Verfahren zum Bestücken mit einem Preform umfasst die Schritte:
- Bereitstellen eines Behälters auf einem Drehteller
- Drehen des Drehtellers gemeinsam mit dem Behälter in eine vorbestimmte Lage
- Einbringen eines Preforms in den Behälter.

Wie bereits erläutert, werden faserbasierte Behälter typischerweise in einer zwei- oder mehrteiligen Form gefertigt. Dies hat zur Folge, dass die entsprechenden Behälter nicht perfekt rotationssymmetrisch sind, sondern, beispielsweise insbesondere im Bereich der Formtrennebene oder der Formtrennebenen feine Grate aufweisen, die in Bezug zur restlichen Oberfläche des Behälters vorstehen können.

Durch das Drehen des Drehtellers gemeinsam mit dem Behälter in eine vorbestimmte Lage lässt sich der Behälter entsprechend der vorbestimmten Lage ausrichten. Bei dieser vorbestimmten Lage kann es sich beispielsweise um eine Lage handeln, die relativ zur Ausrichtung eines späteren Blasformwerkzeugs, in welches der faserbasierte Behälter gemeinsam mit dem Preform eingebracht wird, eine bestimmte Ausrichtung aufweist. So kann beispielsweise ein vorstehender Grat am Behälter entsprechend einer Formtrennebene des späteren Blasformwerkzeugs ausgerichtet werden.

Der Drehteller und der Behälter weisen eine gemeinsame Drehachse auf, um welche der Drehteller mit dem Behälter zur Positionierung des Behälters rotiert wird. Die Drehachse entspricht dabei der Längsachse des Behälters. Beim Drehteller handelt es sich um eine Vorrichtung zur Aufnahme eines einzelnen Behälters, sodass jeder einzelne Behälter individuell verdreht werden kann.

Vor dem Einbringen des Preforms in den Behälter kann dieser auf eine erhöhte Temperatur erwärmt werden.

Durch die Erhöhung der Temperatur des Preforms kann dieser in einem späteren Schritt einfach aufgeblasen werden.

Zum Einbringen des Preforms in den Behälter kann der Behälter vertikal in eine Übergabeposition bewegt werden.

Eine vertikale Bewegung kann mit einfachen Mitteln realisiert werden, da lediglich eine lineare Bewegung notwendig ist. Zudem kann der Preform in einer entsprechenden Lage gehalten werden und muss nicht zusätzlich ebenfalls bewegt werden.

Zum Bewegen des Behälters kann eine Hebevorrichtung vorgesehen sein, auf welcher der Behälter mit seinem Boden gehalten wird.

Durch das Halten des Behälters an seinem Boden bleibt seine Peripherie und somit der Behälterkörper und gegebenenfalls eine daran anschliessende Behälteröffnung frei und einsehbar. Eine rotative Position des Behälters kann einfach überprüft werden, beispielsweise mit optischen Sensoren.

Eine Hebevorrichtung ist ein einfaches und kostengünstiges Beispiel um eine vertikale Bewegung zu realisieren.

Vorzugsweise ist der Behälter mit einem Unterdruck auf der Hebevorrichtung gehalten.

Durch das Halten des Behälters mit Unterdruck sind am Behälter keine zusätzlichen Elemente zum Halten des Behälters notwendig. Zudem können Druckstellen, wie sie beispielsweise durch Greifvorrichtungen verursacht werden können, vermieden werden.

Vorzugsweise wird der Drehteller beim Bereitstellen des Behälters so lange verdreht, bis ein Eingriffselement des Drehtellers in ein korrespondierendes Formelement des Behälters greift.

Ein Formelement am Behälter weist bei jedem Behälter in Bezug zur Formtrennebene die gleiche Position und/oder Lage auf. Eine Ausrichtung anhand eines entsprechenden Formelementes führt also dazu, dass die Formtrennebene des Behälters ebenfalls eine entsprechende Ausrichtung erfährt.

Durch das Drehen des Drehtellers bis zum Eingriff des Eingriffselements des Drehtellers in das korrespondierende Formelement kann entsprechend der Drehteller in Bezug zur Formtrennebene des Behälters positioniert werden.

Anhand der Lage des Drehtellers kann also auf die Lage der Formtrennebene des Behälters geschlossen werden und diese entsprechend bestimmt werden. Durch weiteres Drehen des Drehtellers kann somit die Formtrennebene des Behälters in eine vorbestimmte Lage gedreht werden.

Dabei wird der Behälter insbesondere erst nach dem Eingriff des Eingriffselements in das Formelement verdreht. Entsprechend ist während des Verdrehens des Behälters dieser in seiner Lage relativ zum Formelement und damit relativ zum Drehteller positioniert.

Durch das Drehen des Drehtellers wird also der Behälter ebenfalls verdreht.

Vorzugsweise wird während des Drehens des Behälters dieser mit einer Führungsvorrichtung an seiner Öffnung gehalten und wird insbesondere zwischen der Führungsvorrichtung und dem Drehteller geklemmt.

Die Führungsvorrichtung verhindert ein ungewolltes Umfallen des Behälters. Zudem kann mittels Führungsvorrichtung die Behälteröffnung zentrisch positioniert werden. Die vertikale Bewegung in eine Übergabeposition kann im Anschluss ohne weitere Korrektur vorgenommen werden.

Dabei kann vorgesehen sein, dass der Preform vor dem Einbringen in den Behälter in einer Übergabeposition platziert wird.

Der Preform kann somit statisch in einer entsprechenden Position gehalten werden und lediglich der Behälter muss relativ zum Preform bewegt werden.

Nach dem Einbringen des Preforms kann dieser gemeinsam mit dem Behälter mit einem Greifer gehalten werden.

Dies ermöglicht das einfache Bewegen des Preforms gemeinsam mit dem Behälter von der Übergabeposition in ein entsprechendes Blasformwerkzeug, in welches der Preform gemeinsam mit dem Behälter eingebracht wird. Nach dem Einbringen des Behälters gemeinsam mit dem Preform in das Blasformwerkzeug wird der Preform entsprechend aufgeblasen.

Beim Greifer kann es sich um einen Greifer handeln, wie er in der Schweizer Patentanmeldung CH1203/20 beschrieben ist. Insbesondere handelt es sich um einen Greifer, der eine Innenwandung des faserbasierten Behälters auf eine Aussenfläche des Preforms presst.

Das Blasformwerkzeug kann ebenfalls entsprechend der obengenannten Patentanmeldung ausgebildet sein und eine Kopfplatte aufweisen, auf die sich der Greifer abstützen kann.

Der Greifer und die Kopflatte des Blasformwerkzeugs sind insbesondere entsprechend dem beanspruchten System aus Greifer und Kopfplatte der CH1203/20 ausgebildet.

Der Greifer presst eine Innenwandung des faserbasierten Behälters auf eine Aussenfläche des Preforms. Die Aussenfläche des Preforms kann sich am Hals des Preforms befinden, es ist jedoch auch möglich, dass sich die Aussenfläche auf einem Bereich eines Fortsatzes am Hals des Preforms bildet. So kann der Greifer die Kombination aus Preform und Behälter einfach und sicher halten.

Ein weiterer Aspekt der Erfindung betrifft ein Verfahren zum Einbringen eines faserbasierten Behälters gemeinsam mit einem darin angeordneten Preform in ein Blasformwerkzeug. Das Verfahren umfasst die Schritte:
- Bestücken eines faserbasierten Behälters mit einem Preform mit einem wie vorliegend beschriebenen Verfahren,
- Drehen des Behälters in die vorbestimmte Lage, derart, dass eine am Behälter vorhandene Formtrennebene, herführend von der Produktion des Behälters, in eine relativ zur Formtrennebene des Blasformwerkzeugs definierte Lage gedreht wird.

Dabei entspricht die Lage der Formtrennebene des Behälters der Lage der Formtrennebene des Blasformwerkzeugs, sodass allfällige Grate am Behälter in der Formtrennebene des Blasformwerkzeugs zu liegen kommen. Dadurch ist verhindert, dass die vorstehenden Grate an einer Position innerhalb der Kavität des Blasformwerkzeugs aufliegen und entsprechend dadurch der Behälter verformt und/oder beschädigt wird.

Dabei wäre es vorstellbar, dass das Blasformwerkzeug im Bereich der Formtrennebene Aufweitungen zur Aufnahme der vorstehenden Grate des Behälters aufweist.

Alternativ könnte vorgesehen sein, dass das Blasformwerkzeug in einer zur Formtrennebene unterschiedlichen Position Aufweitungen aufweist zur Aufnahme der vorstehenden Grate des Behälters. In diesem Fall würde der Behälter in eine vorbestimmte Lage gedreht, die entsprechend diesen Ausnehmungen ausgerichtet ist, sodass beim Bestücken des Blasformwerkzeugs mit dem Behälter die vorstehenden Grate an den, beziehungsweise in den, entsprechenden Ausnehmungen zu liegen kommt.

Vorzugsweise wird der Behälter gemeinsam mit dem Preform mit einem Greifer von einer Übergabeposition in eine Kavität des Blasformwerkzeugs eingebracht.

Dadurch ist sichergestellt, dass sich eine relative Position des Behälters und des Preforms in Bezug zum Blasformwerkzeug nicht ändert oder lediglich in einem vorbestimmten Mass.

Dabei ist der Greifer derart ausgebildet, dass er beim Greifen eine Innenwandung des faserbasierten Behälters auf eine Aussenfläche des Preforms presst und somit Preform und Behälter gemeinsam hält.

Ein weiterer Aspekt der Erfindung betrifft eine Vorrichtung zum Bestücken eines faserbasierten Behälters in einer vorbestimmten Lage mit einem Preform. Die Vorrichtung weist einen Drehteller zum Verdrehen eines darauf angeordneten Behälters in die vorbestimmte Lage auf. Der Drehteller ist als eine Vorrichtung zur Aufnahme eines einzelnen Behälters ausgebildet, sodass der einzelne Behälter individuell verdreht werden kann.

Durch eine derartige Vorrichtung mit einem Drehteller kann ein Behälter entsprechend einfach in seiner rotativen Position verändert werden.

Dabei kann am Drehteller zumindest ein Eingriffselement angeordnet sein. Dieses ist geeignet in ein im wesentlichen korrespondierendes Formelement des Behälters einzugreifen, sodass der Behälter mit den Drehteller verdrehbar ist.

Durch den Eingriff eines Eingriffselementes in das Formelement kann der Behälter gemeinsam mit dem Drehteller verdreht werden. Eine relative Position oder Lage des Drehtellers in Bezug zum Behälter wird beibehalten. Entsprechend kann aus der Position des Drehtellers auf eine Position des Behälters geschlossen werden.

Die Vorrichtung kann zumindest eine Hebevorrichtung aufweisen, mit welcher der Behälter in einer vertikalen Richtung bewegt werden kann.

Dies erlaubt das einfache Verschieben des Behälters in eine Übergabeposition, in welcher ein Preform in den Behälter eingebracht werden kann.

Die Hebevorrichtung kann ein Auflageelement aufweisen, auf welches ein Boden des Behälters aufsetzbar ist. Das Auflageelement ist insbesondere im wesentlichen komplementär zu einer Ausbildung zumindest eines Teilbereichs des Bodens des Behälters.

Durch das Auflageelement ist der Behälter reproduzierbar auf der Hebevorrichtung aufsetzbar. Dies ermöglicht es, dass sämtliche Behälter auf der Hebevorrichtung die gleiche Lage aufweisen.

Durch eine im Wesentlichen komplementäre Ausbildung zumindest eines Teilbereichs des Bodens kann eine definierte Schnittstelle zwischen dem Boden des Behälters und dem Auflageelement geschaffen werden, sodass der Behälter positionsgetreu auf dem Auflageelement positioniert werden kann.

Das Auflageelement kann insbesondere im wesentlichen kreisringförmig ausgebildet sein und den Drehteller umschliessen. Das Auflageelement ist insbesondere relativ zum Drehteller vertikal verschiebbar.

Durch die kreisringförmige Ausbildung des Auflageelementes kann innerhalb des Auflageelementes der Drehteller angeordnet sein. Dieser lässt sich bei dieser Ausbildung unabhängig des Auflageelements rotieren und verdrehen. Durch die relative Verschiebbarkeit des Auflageelementes zum Drehteller kann das Auflageelement, beziehungsweise ein sich darauf befindlicher Behälter, vom Drehteller abgehoben werden.

Dies erlaubt das einfache vertikale Bewegen des Behälters in eine Übergabeposition, ohne dass der Drehteller mit bewegt werden muss. Die entsprechenden Einrichtungen zum Bewegen des Drehtellers können stationär verbleiben.

Die kreisringförmige Ausbildung des Auflageelementes ermöglicht die Aufnahme eines entsprechenden Bodens des Behälters unabhängig von seiner primären Lage in Bezug auf seine Rotationsachse.

Die Hebevorrichtung kann eine Einrichtung zum Erzeugen eines Unterdrucks aufweisen, sodass ein auf der Hebevorrichtung angeordneter Behälter mittels Unterdrucks an der Hebevorrichtung gehalten ist.

Die Vorrichtung zum Erzeugen eines Unterdrucks ist insbesondere als Bestandteil des Auflageelementes ausgebildet.

Durch die Vorrichtung zum Erzeugen eines Unterdrucks kann der Behälter gehalten werden, ohne dass zusätzliche Elemente zum Halten des Behälters notwendig werden. Zudem können Druckstellen, wie sie beispielsweise durch Greifvorrichtungen verursacht werden können, vermieden werden.

Durch die Ausbildung als Bestandteil des Auflageelementes kann der Behälter sicher am Auflageelement gehalten werden.

Die Vorrichtung zum Erzeugen des Unterdrucks weist insbesondere im Bereich der komplementären Ausbildung des Auflageelementes entsprechende Öffnungen auf.

Der Unterdruck lässt sich also in den Bereichen erzeugen, in denen zwischen dem Auflageelement und dem Behälter nur geringfügige Toleranzen vorhanden sind. Dies erhöht die Effizienz der Vorrichtung zum Erzeugen des Unterdrucks.

Eine Führungsvorrichtung an der Vorrichtung ermöglicht es, den Behälter während des Drehvorgangs gegen ein Umfallen oder Kippen zu sichern. Zudem ist es ermöglicht, den Behälter und insbesondere dessen Behälteröffnung zu zentrieren.

Die Vorrichtung kann einen Greifer aufweisen um den Behälter gemeinsam mit dem Preform von einer Übergabeposition in ein Blasformwerkzeug einzubringen.

Dabei kann der Greifer derart ausgebildet sein, dass er beim Greifen eine Innenwandung des faserbasierten Behälters auf eine Aussenfläche des Preforms presst und somit Preform und Behälter gemeinsam hält.

Ein derartiger Greifer erlaubt es den Behälter und den Preform relativ zueinander zu fixieren und insbesondere eine Position des Behälters relativ zu der Vorrichtung und daher im Anschluss auch relativ zum Blasformwerkzeug einzuhalten oder beispielsweise um einen vorbestimmten Betrag zu verändern.

Die Vorrichtung kann zudem ein erstes Transportband zum Bereitstellen von Behältern aufweisen. Dadurch können die Behälter, die bestückt werden sollen, gleichmässig und an einer wiederkehrenden Position der Vorrichtung zugeführt werden.

Anhand von schematischen Figuren werden unterschiedliche Aspekte der Erfindung beispielhaft beschrieben. Es zeigt:
- Figur 1:: Eine schematische Ansicht einer Vorrichtung zum Bestücken eines faserbasierten Behälters;
- Figur 2:: einen ersten Verfahrensschritt anhand einer Detailansicht aus der Figur 1;
- Figur 3:: einen weitern Verfahrensschritt;
- Figur 4:: einen weiteren Verfahrensschritt;
- Figur 5A, 5B:: eine Ansicht auf eine Hebevorrichtung gemeinsam mit einem zugehörigen Boden eines Behälters;
- Figur 6A, 6B:: ein Blasformwerkzeug;
- Figur 7:: einen Behälter mit einem Preform in einem Greifer.

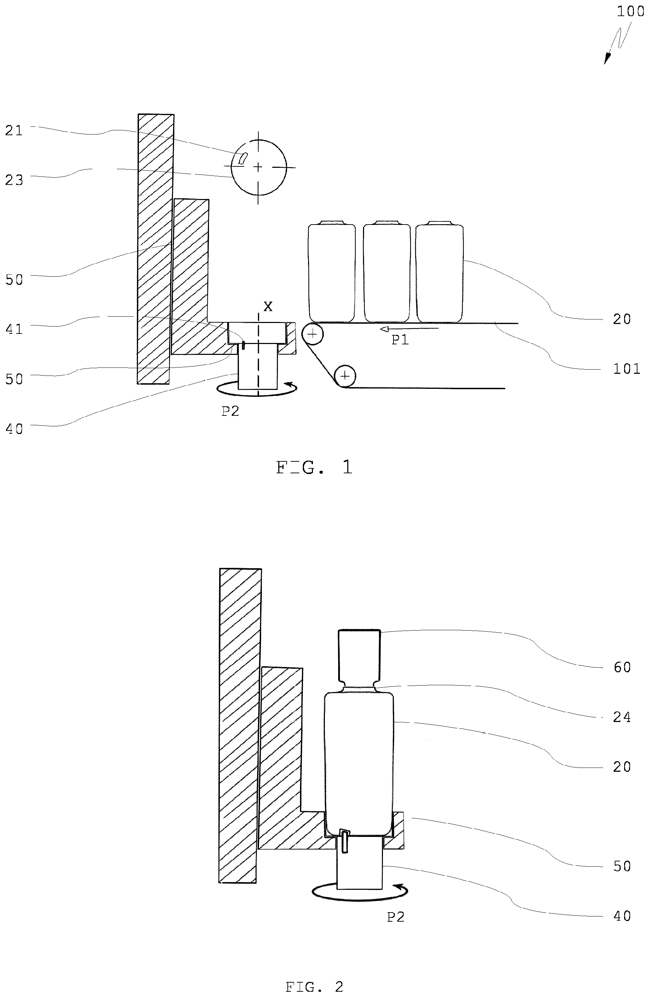

Die Figur 1 zeigt eine schematische Ansicht einer Vorrichtung 100 zum Bestücken eines faserbasierten Behälters 20. Die Vorrichtung 100 weist ein Transportband 101 auf, auf dem Behälter 20 angeordnet sind, die zugeführt werden. Die Vorrichtung 100 weist zudem eine Hebevorrichtung 50 mit einem daran angeordneten Auflageelement 51 sowie einen Drehteller 40 auf. Die Hebevorrichtung 50 und vorliegend das Auflageelement 51 umschliesst den Drehteller 40 kreisringförmig. Am Drehteller 40 ist ein Eingriffselement 41 angeordnet zum Eingriff in ein im wesentlichen komplementäres Formelement 21 das am Boden 23 eines Behälters 20 angeordnet ist. Der Einfachheit halber ist eine Unteransicht auf den Boden 23 des Behälters 20 in der Figur 1 oberhalb des Drehtellers 40 gezeigt.

Die Behälter 20 werden mit dem Transportband in Pfeilrichtung P1 bewegt. Der Drehteller 40 kann um seine Rotationsachse X rotiert werden, ist also um seine Rotationsachse X drehbar. Dies ist durch den Pfeil P2 illustriert.

Zum Bestücken der Hebevorrichtung 50 wird das Transportband in Richtung des Pfeils P1 bewegt, sodass ein erster Behälter 20 auf dem Drehteller 40 und entsprechend auf dem Auflageelement 51 platziert wird.

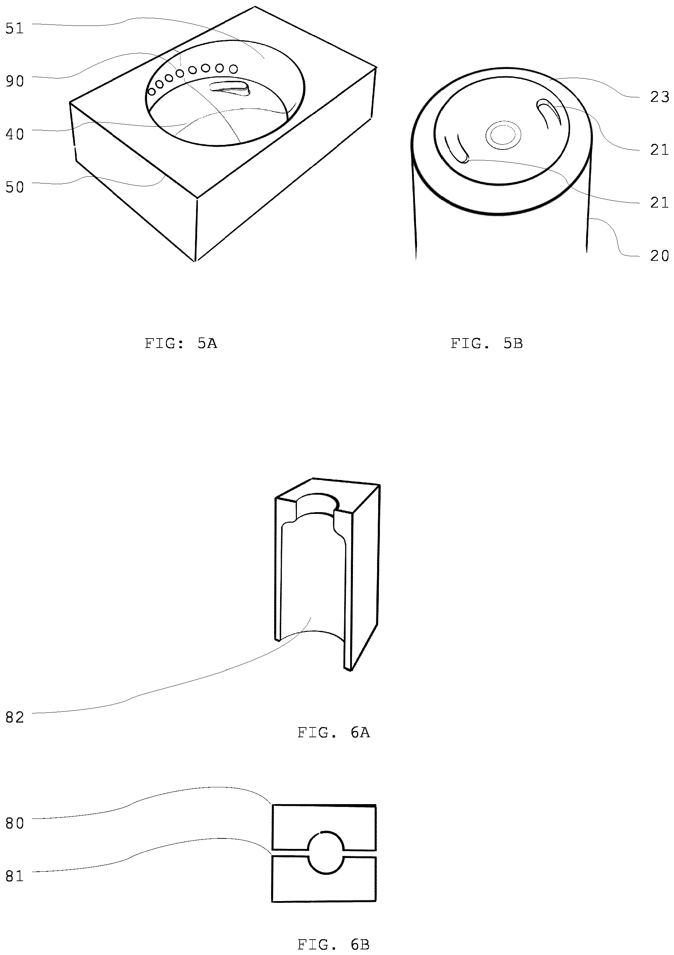

Die Figur 2 zeigt einen ersten Verfahrensschritt anhand einer Detailansicht aus der Figur 1. Im Anschluss an das Platzieren des Behälters 20 auf dem Auflageelement 51 (siehe Fig. 5A) wird eine Führungsvorrichtung 60 in die Öffnung 24 des Behälters 20 eingebracht und der Behälter 20 in Bezug zur Rotationsachse X zentriert. Dazu wird die Führungsvorrichtung 60 in Richtung des Drehtellers 40 in die Öffnung 24 des Behälters 20 hinein bewegt.

Im Anschluss wird der Drehteller 40 in Pfeilrichtung P2 rotiert bis das Eingriffselement 41 in Wirkverbindung mit dem Formelement 21 am Boden 23 des Behälters 20 ist. Sobald dieser Kontakt hergestellt ist, wird der Drehteller 40 weiterbewegt, bis dieser eine zuvor vorbestimmte Lage aufweist. Diese Lage entspricht einer relativen Lage in Bezug zu einer Formtrennebene des Blasformwerkzeugs (siehe dazu Figur 6) in welches der Behälter 20 später platziert wird. Entsprechend der Lage des Drehtellers 40 weist also auch der Behälter 20 eine in Bezug zum späteren Blasformwerkzeug bestimmte relative Lage auf.

Sobald der Behälter 20 also in der vorbestimmten Lage positioniert ist, wird eine Einrichtung 90 zur Erzeugung von Unterdruck (siehe dazu Figur 5) aktiviert und dadurch der Behälter 20 am Auflageelement 51 gehalten.

Anschliessend wird die Führungsvorrichtung 60 wieder aus der Öffnung 24 des Behälters 20 entfernt, sodass diese Öffnung 24 frei zugänglich ist.

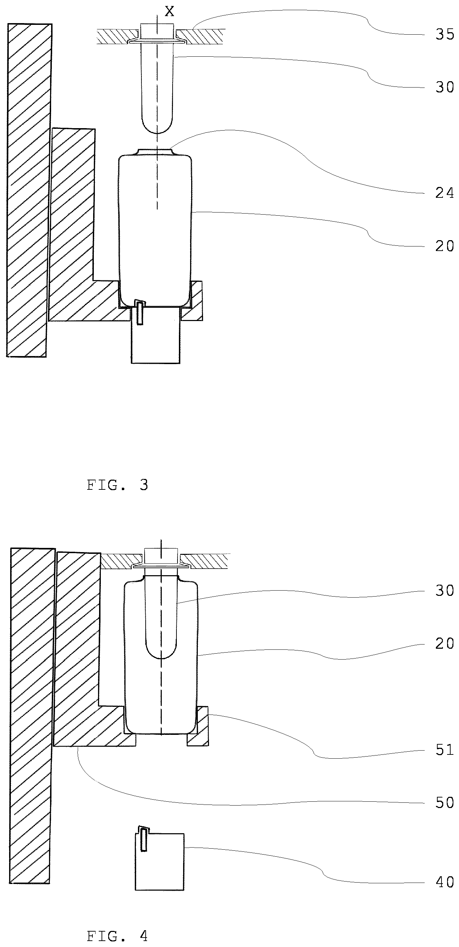

Die Figur 3 zeigt einen weitern Verfahrensschritt. Im Anschluss an die Positionierung des Behälters 20, wie sie zu Figur 2 beschrieben ist, wird oberhalb des Behälters 20 ein Preform 30 mit einer Greifvorrichtung 35 in die hier dargestellte Übergabeposition gebracht. Wie aus der Darstellung gemäss der Figur 3 ersichtlich ist, ist der Behälter 20 und der Preform 30 in Linie entlang der Achse X übereinander angeordnet, sodass der Preform 30 in Bezug zu Öffnung 24 zentral angeordnet ist. Die Greifvorrichtung 35 hält den Preform 30 lediglich oberhalb eines hier nicht näher bezeichneten Supportringes, sodass der Behälter 20 unterhalb des Supportringes auf dem Preform 30 angeordnet werden kann.

Die Figur 4 zeigt einen weiteren Verfahrensschritt nach der Bereitstellung des Preforms 30 in der Übergabeposition. Die Hebevorrichtung 50 wurde in diesem Schritt vertikal nach oben bewegt, sodass der Behälter 20 sich ebenfalls in der Übergabeposition befindet. Der Behälter 20 wurde durch das vertikale Verschieben über den bereitgestellten Preform 30 bewegt, sodass sich der Preform 30 durch die Öffnung 24 in den Behälter 20 hinein erstreckt.

Es ist ersichtlich, dass die Hebevorrichtung 50 unabhängig vom Drehteller 40 in vertikaler Richtung bewegt worden ist.

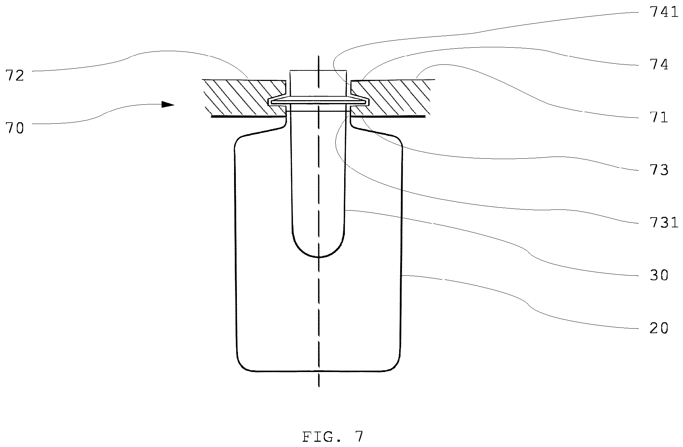

Im Anschluss wird der Greifer 35 gelöst und weggefahren und der Preform mit einem weiteren Greifer 70 gemeinsam mit dem Behälter 20 gehalten, sodass der Preform 30 gemeinsam mit dem Behälter 20 in ein entsprechendes Blasformwerkzeug 80 eingebracht werden kann. Ein entsprechender Greifer ist zu Figur 7 beschrieben.

Die Figuren 5A und 5B zeigen eine Ansicht auf eine Hebevorrichtung 50 und einen Drehteller 40 (Figur 5A) gemeinsam mit einem zugehörigen Boden 23 eines Behälters 20 (Figur 5B). An der Hebevorrichtung 50 ist das Auflageelement 51 angeordnet. Am Auflageelement 51 sind mehrere Öffnungen ersichtlich, die einen Teil der Einrichtung 90 zum Erzeugen eines Unterdrucks bereitstellen. Die hier sichtbare Oberfläche des Auflageelementes 51 ist im wesentlichen komplementär zu einer entsprechenden Oberfläche des Bodens 23 des Behälters 20 ausgebildet. Der Boden des Behälters 23 ist in der Figur 5B ersichtlich. Auf dem Boden 23 angeordnet sind vorliegend zwei Formelemente 21 die einander in Bezug zu einer Längsachse des Behälters diametral gegenüber liegen. Die Formtrennebene des Behälters 20 und die damit einhergehenden Grate sind nicht näher dargestellt.

Die Figuren 6A und 6B zeigen ein Blasformwerkzeug 80 in einer Draufsicht (Figur 6A) und in einer Schnittansicht entlang der Formtrennebene 81, sodass lediglich eine Hälfte des Blasformwerkzeugs ersichtlich ist (Figur 6B). Das Blasformwerkzeug 80 weist zwei nicht näher bezeichnete Blasformhälften auf, die gemeinsam eine Kavität 82 bereitstellen. Zwischen den beiden Blasformhälften erstreckt sich die Formtrennebene 81.

Die Figur 7 zeigt einen Behälter 20 mit einem Preform 30 in einem Greifer 70. Mit dem Greifer 70 wird der Behälter 20 gemeinsam mit dem Preform 30 in das Blasformwerkzeug 80 überführt. Dabei weist der Greifer 70 zwei Schenkel 71 und 72 auf. Nachfolgend ist lediglich der Schenkel 71 beschrieben. Die Ausführungen gelten jedoch auch für den Schenkel 72. Der Schenkel 71 weist eine erste Greifbacke 73 und eine zweite Greifbacke 74 auf. An der ersten Greifbacke 73 ist eine Greiffläche 731 angeordnet und an der zweiten Greifbacke 74 eine Greiffläche 741. Die Greifflächen 741 und 731 erstrecken sich jeweils entlang eines Kreisrings über einen Winkel von 30°. Die erste Greifbacke 73 ist zu der zweiten Greifbacke 74 axial beabstandet. Im Querschnitt bildet die erste Greifbacke 73 mit der zweiten Greifbacke 74 einen im Wesentlichen C-förmigen Querschnitt. Dieser C-förmige Querschnitt ist ausgebildet um einen entsprechenden Supportring aufzunehmen. In Bezug zur zweiten Greifbacke 74 ist die erste Greifbacke 73 radial nach aussen versetzt.

Insbesondere an der Greiffläche 731 der ersten Greifbacke 73 können Konturen ausgebildet sein die die Reibung zwischen dieser Greiffläche 731 und einer zu greifenden faserbasierten Hülle 20 verbessern.

## Patentansprüche

1. Verfahren zum Bestücken eines faserbasierten Behälters (20) mit einem Preform (30), umfassend die Schritte
- Bereitstellen eines Behälters (20) auf einem Drehteller (40)
- Drehen des Drehtellers (40) gemeinsam mit dem Behälter (20) in eine vorbestimmte Lage
- Einbringen eines Preforms (30) in den Behälter (20).

2. Verfahren nach Anspruch 1, **dadurch gekennzeichnet, dass** der Preform (30) vor dem Einbringen in den Behälter (20) auf eine erhöhte Temperatur erwärmt wird.

3. Verfahren nach Anspruch 1 oder 2, **dadurch gekennzeichnet, dass** zum Einbringen des Preforms (30) in den Behälter (20) der Behälter (20) vertikal in eine Übergabeposition bewegt wird.

4. Verfahren nach Anspruch 3, **dadurch gekennzeichnet, dass** zum Bewegen des Behälters (20) ein Hebevorrichtung (50) vorgesehen ist, auf welcher der Behälter (20) mit seinem Boden (23) gehalten wird.

5. Verfahren nach Anspruch 4, **dadurch gekennzeichnet, dass** der Behälter (20) mit einem Unterdruck auf der Hebevorrichtung (50) gehalten wird.

6. Verfahren nach einem der Ansprüche 1 bis 5, **dadurch gekennzeichnet, dass** der Drehteller (40) beim Bereitstellen des Behälters (20) solange verdreht wird, bis ein Eingriffselement (41) des Drehtellers (40) in ein korrespondierendes Formelement (21) des Behälters (20) greift.

7. Verfahren nach Anspruch 6, **dadurch gekennzeichnet, dass** der Behälter (20) erst nach dem Eingriff des Eingriffselements (41) in das Formelement (21) verdreht wird.

8. Verfahren nach einem der Ansprüche 1 bis 7, **dadurch gekennzeichnet, dass** während des Drehens des Behälters (20) dieser mit einer Führungsvorrichtung (60) an seiner Öffnung gehalten wird und insbesondere zwischen der Führungsvorrichtung (60) und dem Drehteller (40) geklemmt wird.

9. Verfahren nach einem der Ansprüche 1 bis 8, **dadurch gekennzeichnet, dass** der Preform (30) vor dem Einbringen in den Behälter (20) in einer Übergabeposition platziert wird.

10. Verfahren nach einem der Ansprüche 1 bis 9, **dadurch gekennzeichnet, dass** nach dem Einbringen des Preforms (30) in den Behälter (20) der Behälter (20) gemeinsam mit dem Preform (30) mit einem Greifer (70) gehalten wird.

11. Verfahren zum Einbringen eines faserbasierten Behälters (20) gemeinsam mit einem darin angeordneten Preform (30) in ein Blasformwerkzeug (80), umfassend die Schritte
- Bestücken eines faserbasierten Behälters (20) mit einem Preform (30) mit einem Verfahren gemäss einem der Ansprüche 1 bis 10,
- Drehen des Behälters (20) in die vorbestimmte Lage, derart, dass eine am Behälter (20) vorhandene Formtrennebene (22), herführend von der Produktion des Behälters (20), in eine relativ zur Formtrennebene (81) des Blasformwerkzeugs (80) definierte Lage gedreht wird.

12. Verfahren nach Anspruch 11, **dadurch gekennzeichnet, dass** der Behälter (20) gemeinsam mit dem Preform (30) mit einem Greifer (70) von einer Übergabeposition in eine Kavität (82) des Blasformwerkzeugs (80) eingebracht wird.

13. Vorrichtung (100) zum Bestücken eines faserbasierten Behälters (20) in einer vorbestimmten Lage mit einem Preform (30), wobei die Vorrichtung (100) einen Drehteller (40) zum Verdrehen eines darauf angeordneten Behälters (20) in die vorbestimmte Lage aufweist, wobei der Drehteller als eine Vorrichtung zur Aufnahme eines einzelnen Behälters ausgebildet ist, sodass der einzelne Behälter individuell verdreht werden kann.

14. Vorrichtung (100) nach Anspruch 13, **dadurch gekennzeichnet, dass** am Drehteller (40) zumindest ein Eingriffselement (41) angeordnet ist, wobei dieses geeignet ist, in ein im wesentlichen korrespondierendes Formelement (21) des Behälters (20) einzugreifen, sodass der Behälter (20) mit dem Drehteller (40) verdrehbar ist.

15. Vorrichtung (100) nach einem der Ansprüche 13 oder 14, **dadurch gekennzeichnet, dass** die Vorrichtung (100) zumindest eine Hebevorrichtung (50) aufweist, mit welcher der Behälter (20) in einer vertikalen Richtung bewegt werden kann.

16. Vorrichtung (100) nach Anspruch 15, **dadurch gekennzeichnet, dass** die Hebevorrichtung ein Auflageelement (51) aufweist, auf welches ein Boden (23) des Behälters (20) aufsetzbar ist, wobei das Auflageelement (51) insbesondere im wesentlichen komplementär zu einer Ausbildung zumindest eines Teilbereichs des Bodens (23) des Behälters (20) ist.

17. Vorrichtung (100) nach Anspruch 16, **dadurch gekennzeichnet, dass** das Auflageelement (51) im wesentlichen kreisringförmig ausgebildet ist und den Drehteller (40) umschliesst und insbesondere relativ zum Drehteller (40) vertikal verschiebbar ist.

18. Vorrichtung (100) nach einem der Ansprüche 15 bis 17, **dadurch gekennzeichnet, dass** die Hebevorrichtung (50) eine Einrichtung (90) zum Erzeugen eines Unterdrucks aufweist, sodass ein auf der Hebevorrichtung (50) angeordneter Behälter (20) mittels Unterdruck an der Hebevorrichtung (50) gehalten ist.

19. Vorrichtung (100) nach einem der Ansprüche 13 bis 18, **dadurch gekennzeichnet, dass** die Vorrichtung (100) eine Führungsvorrichtung (60) aufweist, um den Behälter (20) während des Drehens zu führen und zu stützen.

20. Vorrichtung (100) nach einem der Ansprüche 13 bis 19, **dadurch gekennzeichnet, dass** die Vorrichtung (100) einen Greifer (70) aufweist um den Behälter (20) gemeinsam mit dem Preform (30) von einer Übergabeposition in ein Blasformwerkzeug (80) einzubringen.

21. Vorrichtung (100) nach einem der Ansprüche 13 bis 20, **dadurch gekennzeichnet, dass** die Vorrichtung (100) ein erstes Transportband (101) zum Bereitstellen von Behältern (20) aufweist.

## Claims

1. A method for loading a fiber-based container (20) with a preform (30), comprising the steps of:
- providing a container (20) on a rotary plate (40)
- rotating the rotary plate (40) together with the container (20) into a predetermined position;
- inserting a preform (30) into the container (20).

2. The method according to claim 1, **characterized in that** the preform (30) is heated to a higher temperature before being inserted into the container (20).

3. The method according to either claim 1 or claim 2, **characterized in that** the container (20) is moved vertically into a transfer position in order to insert the preform (30) into the container (20).

4. The method according to claim 3, **characterized in that** a lifting device (50) is provided for moving the container (20), on which lifting device the container (20) is held by its base (23).

5. The method according to claim 4, **characterized in that** the container (20) is held on the lifting device (50) by means of a negative pressure.

6. The method according to any one of claims 1 to 5, **characterized in that** the rotary plate (40) is rotated when providing the container (20) until an engagement element (41) of the rotary plate (40) engages in a corresponding shaped element (21) of the container (20).

7. The method according to claim 6, **characterized in that** the container (20) is only rotated after the engagement element (41) is engaged in the shaped element (21).

8. The method according to any one of claims 1 to 7, **characterized in that**, during the rotational movement of the container (20), said container is held by a guide device (60) at its opening and is clamped in particular between the guide device (60) and the rotary plate (40).

9. The method according to any one of claims 1 to 8, **characterized in that** the preform (30) is placed in a transfer position before being inserted into the container (20).

10. The method according to any one of claims 1 to 9, **characterized in that**, after the preform (30) has been inserted into the container (20), the container (20) is held, together with the preform (30), by a gripper (70).

11. A method for inserting a fiber-based container (20) together with a preform (30) arranged therein into a blow mold (80), said method comprising the steps of:
- loading a fiber-based container (20) together with a preform (30) by means of a method according to any one of claims 1 to 10,
- rotating the container (20) into the predetermined position such that a mold parting plane (22) on the container (20), created by the production of the container (20), is rotated into a position defined relative to the mold parting plane (81) of the blow mold (80).

12. The method according to claim 11, **characterized in that** the container (20) together with the preform (30) is inserted into a cavity (82) of the blow mold (80) by a gripper (70) from a transfer position.

13. A device (100) for loading a fiber-based container (20) together with a preform (30) in a predetermined position, wherein the device (100) has a rotary plate (40) for rotating a container (20) arranged thereon into the predetermined position, wherein the rotary plate (40) is a device for receiving a single container (20) such that the single container (20) can be individually rotated.

14. The device (100) according to claim 13, **characterized in that** at least one engagement element (41) is arranged on the rotary plate (40), said engagement element being suitable for engaging in a substantially corresponding shaped element (21) of the container (20) such that the container (20) can be rotated together with the rotary plate (40).

15. The device (100) according to either claim 13 or claim 14, **characterized in that** the device (100) has at least one lifting device (50) with which the container (20) can be moved in a vertical direction.

16. The device (100) according to claim 15, **characterized in that** the lifting device has a support element (51) on which a base (23) of the container (20) can be placed, the support element (51) in particular being substantially complementary to a design of at least a portion of the base (23) of the container (20).

17. The device (100) according to claim 16, **characterized in that** the support element (51) is substantially annular and encloses the rotary plate (40) and, in particular, is vertically displaceable relative to the rotary plate (40).

18. The device (100) according to any one of claims 15 to 17, **characterized in that** the lifting device (50) has an apparatus (90) for generating a negative pressure such that a container (20) arranged on the lifting device (50) is held on the lifting device (50) by means of negative pressure.

19. The device (100) according to any one of claims 13 to 18, **characterized in that** the device (100) has a guide device (60) for guiding and supporting the container (20) during rotation.

20. The device (100) according to any one of claims 13 to 19, **characterized in that** the device (100) has a gripper (70) for inserting the container (20), together with the preform (30), into a blow mold (80) from a transfer position.

21. The device (100) according to any one of claims 13 to 20, **characterized in that** the device (100) has a first conveyor belt (101) for providing containers (20).

## Revendications

1. Procédé pour charger un récipient (20) à base de fibres avec une préforme (30), comprenant les étapes de
- mise à disposition d'un récipient (20) sur un plateau tournant (40)
- mise en rotation du plateau tournant (40), conjointement avec le récipient (20), jusqu'à une position prédéfinie
- insertion d'une préforme (30) dans le récipient (20).

2. Procédé selon la revendication 1, **caractérisé en ce que** la préforme (30) est chauffée à une température plus élevée, avant l'insertion dans le récipient (20).

3. Procédé selon la revendication 1 ou 2, **caractérisé en ce que**, pour l'insertion de la préforme (30) dans le récipient (20), le récipient (20) est déplacé verticalement dans une position de transfert.

4. Procédé selon la revendication 3, **caractérisé en ce que**, pour le déplacement du récipient (20), il est prévu un dispositif de levage (50) sur lequel le récipient (20) est maintenu avec son fond (23).

5. Procédé selon la revendication 4, **caractérisé en ce que** le récipient (20) est maintenu par une dépression sur le dispositif de levage (50).

6. Procédé selon une des revendications 1 à 5, **caractérisé en ce que**, lors de la mise à disposition du récipient (20), le plateau tournant (40) est tourné jusqu'à ce qu'un élément d'engagement (41) du plateau tournant (40) pénètre dans un élément façonné (21) correspondant du récipient (20).

7. Procédé selon la revendication 6, **caractérisé en ce que** le récipient (20) n'est tourné qu'après l'insertion de l'élément d'engagement (41) dans l'élément façonné (21).

8. Procédé selon une des revendications 1 à 7, **caractérisé en ce que**, pendant la rotation du récipient (20), celui-ci est maintenu avec un dispositif de guidage (60) au niveau de son ouverture et est en particulier serré entre le dispositif de guidage (60) et le plateau tournant (40).

9. Procédé selon une des revendications 1 à 8, **caractérisé en ce que**, avant l'insertion dans le récipient (20), la préforme (30) est placée dans une position de transfert.

10. Procédé selon une des revendications 1 à 9, **caractérisé en ce que**, après l'insertion de la préforme (30) dans le récipient (20), le récipient (20) est maintenu, conjointement avec la préforme (30), par une pince (70).

11. Procédé d'insertion d'un récipient (20) à base de fibres, conjointement avec une préforme (30) disposée dans celui-ci, dans un moule de soufflage (80), comprenant les étapes de
- chargement d'un récipient (20) à base de fibres avec une préforme (30), avec un procédé selon une des revendications 1 à 10,
- mise en rotation du récipient (20) jusqu'à la position prédéfinie, de manière à ce qu'un plan de joint de moule (22), présent sur le récipient (20) suite à la production du récipient (20), soit tourné dans une position définie par rapport au plan de joint de moule (81) du moule de soufflage (80).

12. Procédé selon la revendication 11, **caractérisé en ce que** le récipient (20), conjointement avec la préforme (30), est inséré par une pince (70) dans une cavité (82) du moule de soufflage (80), à partir d'une position de transfert.

13. Dispositif (100) destiné à charger un récipient (20) à base de fibres avec une préforme (30), dans une position prédéfinie, le dispositif (100) comportant un plateau tournant (40) pour tourner un récipient (20) qui y est déposé, jusqu'à la position prédéfinie, le plateau tournant étant réalisé comme dispositif destiné à accueillir un récipient individuel, de sorte que le récipient individuel peut être tourné individuellement.

14. Dispositif (100) selon la revendication 13, **caractérisé en ce qu'**il est prévu sur le plateau tournant (40), au moins un élément d'engagement (41), sachant que celui-ci est adapté pour pénétrer dans un élément façonné (21), sensiblement correspondant, du récipient (20), de sorte que le récipient (20) peut être tourné avec le plateau tournant (40).

15. Dispositif (100) selon une des revendications 13 ou 14, **caractérisé en ce que** le dispositif (100) présente au moins un dispositif de levage (50) qui permet de déplacer le récipient (20) dans une direction verticale.

16. Dispositif (100) selon la revendication 15, **caractérisé en ce que** le dispositif de levage comporte un élément d'appui (51) sur lequel peut être posé un fond (23) du récipient (20), l'élément d'appui (51) étant notamment sensiblement complémentaire d'une conformation d'au moins une zone partielle du fond (23) du récipient (20).

17. Dispositif (100) selon la revendication 16, **caractérisé en ce que** l'élément d'appui (51) est réalisé sensiblement sous la forme d'une bague circulaire et entoure le plateau tournant (40) et peut être déplacé notamment dans le sens vertical par rapport au plateau tournant (40).

18. Dispositif (100) selon une des revendications 15 à 17, **caractérisé en ce que** le dispositif de levage (50) présente un dispositif (90) pour générer une dépression, de sorte qu'un récipient (20) placé sur le dispositif de levage (50) est maintenu par dépression sur le dispositif de levage (50).

19. Dispositif (100) selon une des revendications 13 à 18, **caractérisé en ce que** le dispositif (100) présente un dispositif de guidage (60) pour guider et soutenir le récipient (20) pendant la rotation.

20. Dispositif (100) selon une des revendications 13 à 19, **caractérisé en ce que** le dispositif (100) présente une pince (70) pour insérer le récipient (20), conjointement avec la préforme (30), dans un moule de soufflage (80), à partir d'une position de transfert.

21. Dispositif (100) selon une des revendications 13 à 20, **caractérisé en ce que** le dispositif (100) présente une première bande transporteuse (101) pour la mise à disposition de récipients (20).
